# EUROPÄISCHE PATENTSCHRIFT

(11) **EP 2 225 705 B1**
(45) Veröffentlichungstag und Bekanntmachung des Hinweises auf die Patenterteilung: **27.04.2016**
(21) Anmeldenummer: 08865293.8
(22) Anmeldetag: 16.12.2008
(51) Int. Cl.: G06K 19/077, G06K 7/10, G07D 7/00, B41M 1/00, B41M 3/00, B41M 1/04, B41M 1/06, B41M 1/10, B41M 1/12, B41M 5/00

(54) **Verfahren zur Applikation eines Transponders in Druckprodukte**
Method for application of a transponder in printed products
Procédé d'application d'un transpondeur dans des produits imprimés

(30) Priorität: 22.12.2007 DE 102007062621
(43) Veröffentlichungstag der Anmeldung: 08.09.2010
(60) Teilanmeldung: 13189723.3
(73) Patentinhaber: Baumer hhs GmbH, 47829 Krefeld (DE)
(72) Erfinder: WALTHER, Thomas, CH-9000 Sankt Gallen (CH); WEISS, Robert, 86368 Gersthofen (DE)
(74) Vertreter: Strauss, Steffen
(86) Internationale Anmeldenummer: PCT/EP2008/067604
(87) Internationale Veröffentlichungsnummer: WO 2009/080607

(56) Entgegenhaltungen:
- US-A1- 2003 090 388
- US-A1- 2005 128 525
- US-A1- 2005 230 966
- US-A1- 2008 088 448

## Beschreibung

Die Erfindung betrifft ein Verfahren zur Applikation eines Transponders in Druckprodukte.

RFID bezeichnet Verfahren zur automatischen Identifizierung von Objekten über Funk. Der Einsatz von RFID-Systemen eignet sich grundsätzlich überall dort, wo automatisch gekennzeichnet, erkannt, registriert, gelagert, überwacht oder transportiert werden muss. RFID-Systeme werden in vielfältigen Varianten angeboten. Trotz der grossen Bandbreite der RFID-Lösungen ist jedes RFID-System durch die folgenden drei Eigenschaften definiert:
1. Elektronische Identifikation: Das System ermöglicht eine eindeutige Kennzeichnung von Objekten durch elektronisch gespeicherte Daten.
2. Kontaktlose Datenübertragung: Die Daten können zur Identifikation des Objekts drahtlos über einen Funkfrequenzkanal ausgelesen werden.
3. Senden auf Abruf (on call): Ein gekennzeichnetes Objekt sendet seine Daten nur dann, wenn ein dafür vorgesehenes Lesegerät diesen Vorgang abruft.

Ein RFID-System besteht technologisch betrachtet aus zwei Komponenten, einem Transponder und einem Lesegerät: Der Transponder - auch als "Tag" bezeichnet - fungiert als eigentlicher Datenträger. Er wird an einem Objekt angebracht (beispielsweise an einer Ware oder einer Verpackung) bzw. in ein Objekt integriert (z. B. in eine Chipkarte) und kann kontaktlos über Funktechnologie ausgelesen und je nach Technologie auch wieder beschrieben werden. Grundsätzlich setzt sich der Transponder aus einer integrierten Schaltung und einem Radiofrequenzmodul zusammen. Auf dem Transponder sind eine Identifikationsnummer und weitere Daten über den Transponder selbst bzw. das Objekt, mit dem dieser verbunden ist, gespeichert. Die heutige RFID- Technologie beruht auf den so genannten Smart Labels, Etiketten, die auf die Verpackung aufgeklebt werden. Diese Etiketten haben sich in der Logistik großer Güter bewährt, sind aber für die Anwendung auf Verkaufsverpackungen ungeeignet. Zum einen sind diese wegen des aufwändigen und komplizierten Herstellungsprozesses der Smart Labels sehr teuer, der Endpreis für ein appliziertes Label liegt zwischen 0,25 EUR und 1,00 EUR. Werden diese Kosten in Relation zu den eigentlichen Herstellkosten für eine Verkaufsverpackung gesetzt, zeigt sich, dass sich solche Smart Labels im Endverbraucherbereich nur für sehr teure und aufwändige Güter Iohnen. Aber auch dort zögern die Hersteller der verpackten Güter diese wegen der hohen Kosten einzusetzen. Ein weiterer Aspekt, der gegen den Einsatz der Smart Labels auf Verpackungen für Endverbraucher spricht, ist die Tatsache, dass die Verkaufsverpackung nicht nur Schutz-, sondern auch eine Marketingfunktion hat. Ein nachträglich aufgeklebtes Smart-Label ist aber nur sehr schwer in ein Verpackungsdesign zu integrieren und vermittelt dem Verbraucher ein billiges Image des Produktes.
Die Nutzung der RFID-Technologie für Verbrauchersicherheit und Nachverfolgung im Pharma und Lebensmittelbereich und als Sicherheitselement für hochwertige Güter bedingt folglich eine deutliche Kostenreduktion gegenüber der jetzigen Technologie der Smart Labels. Wie die Produktionskette der Herstellung eines Smart-Labels zeigt, ist dies nur zum Teil durch die Entwicklung kostengünstiger Chips zu erreichen. Ein großer Anteil der Gesamtkosten wird durch die heute sehr komplexe Fertigungsstruktur der Smart-Labels verursacht.

In der RFID-Technologie wird im Wesentlichem mit zwei Frequenzen gearbeitet, der HF-Frequenz (13,56 MHz) und der UHF Frequenz (860-960 MHz). Die Einkoppelungsmechanismen sind unterscheiden sich dabei für beide Frequenzbereiche. Bei der physikalischen Koppelung kommen elektrische, magnetische und elektromagnetische Felder zum Einsatz. RFID Systeme mit sehr kleinen Reichweiten werden als "Close-coupling" Systeme bezeichnet. Sie verwenden sowohl elektrische als auch magnetische Felder zur Koppelung und können auf fast beliebigen Frequenzen betrieben werden, da zum Betrieb der Systeme keine Felder abgestrahlt werden müssen. HF-Systeme arbeiten mit induktiven Koppelungssystemen und benötigen für die Einkoppelung eine Spulenantenne. Die UHF-Systeme arbeiten dagegen mit elektromagnetischen Wellen und benötigen in der Regel eine Dipolantenne. UHF Systeme sind besonders gut drucktechnisch herzustellen, da aufgrund des Skineffekts nur dünne gedruckte Antennenschichten erforderlich sind. Es ist aus dem Stand der Technik bekannt, Antennen für RFID-Transponder zu drucken und anschließend einen Chip oder einen Hilfsträger mit Chip (Strap) mit einem leitfähigen Kleber diesen Chip oder den Strap auf der Antenne zu befestigen. Andere bekannte Befestigungsmethoden für die Befestigung des Chips oder eines Straps sind das Crimpen (mechanisches Klammern) oder das Löten, das zum Beispiel mit einem Laser ausgeführt werden kann.

In WO 2005/101930 A1 und WO 2005/078648 A1 sind verschiedene Methoden dargelegt, bei denen eine Antenne in einem Druckverfahren drucktechnisch hergestellt wird und darauf folgend, während des Druckvorgangs oder auch eines dem Druckvorgang nachgeordneten Verarbeitungsschrittes, ein Chip oder ein Strap elektrisch kontaktend auf der gedruckten Antenne platziert wird.

Der wesentliche Nachteil diese Art der Herstellung eines Transponders liegt darin begründet, dass der Chip oder der Strap relativ exakt auf den Kontaktpunkten der Antenne platziert werden muss. Zusätzlich benötigen elektrisch leitende isotrope Klebstoffe eine genaue Klebstoffpunktepositionierung und eine definierte Abbinde- und Andrückzeit. Anisotrope elektrische Kleber benötigen zusätzlich noch einen gewissen partiell an den Kontaktpunkten aufgebrachten Druck, um die elektrische Leitfähigkeit an den Kontaktpunkten sicher zu stellen. Diese Faktoren führen dazu, dass die Chip- oder die Strap-Applikation relativ Iangsam ist und mit den Prozessgeschwindigkeiten, die ansonsten in der Druckindustrie üblich sind, nicht vereinbar sind.

Die WO 2007/000245 beschreibt eine direkte Integration eines RFID-Chips, der ausgezeichnet ist dadurch, dass Chip und Antenne auf einem Bauteil integriert sind. Solche "Chip-on-coil"-Lösungen sind deutlich einfacher in das Druckprodukt zu integrieren, da handelsüblicher, nicht elektrisch leitender Klebstoff zur Fixierung eingesetzt werden kann und an die Positionierung im Druckprodukt keine hohen Ansprüche gestellt werden. Der Nachteil derartiger Lösungen ist jedoch, dass die Lesereichweite sehr gering ist. Solche Lösungen können nur für die Nahfeldkommunikation eingesetzt werden und erfordern in der Regel eine unmittelbare Nähe oder sogar einen Kontakt zu dem Lesegerät. Deswegen können solche Lösungen in der Sicherheitstechnik eingesetzt werden, versagen aber völlig in Logistik- und Anwendungen der Bestand pflege. Solche Anwendungen erfordern immer eine hohe Lesereichweite. Die gefundene Lösung erlaubt daher keine universelle Anwendung.

Die Aufgabe der Erfindung ist es daher ein kostengünstiges und rationelles Verfahren zur Herstellung von RFID-Transpondern unter Verwendung drucktechnisch hergestellter Antennen in Druckprodukten zu finden.

Aus der US 2005/0230966 A1 ist ein Schutzverfahren für Dokumente, etwa gegen Fälschung, bekannt, unter Zuhilfenahme einer gedruckten Antenne.

Anspruch 1 ist gegen dieses Dokument abgegrenzt.

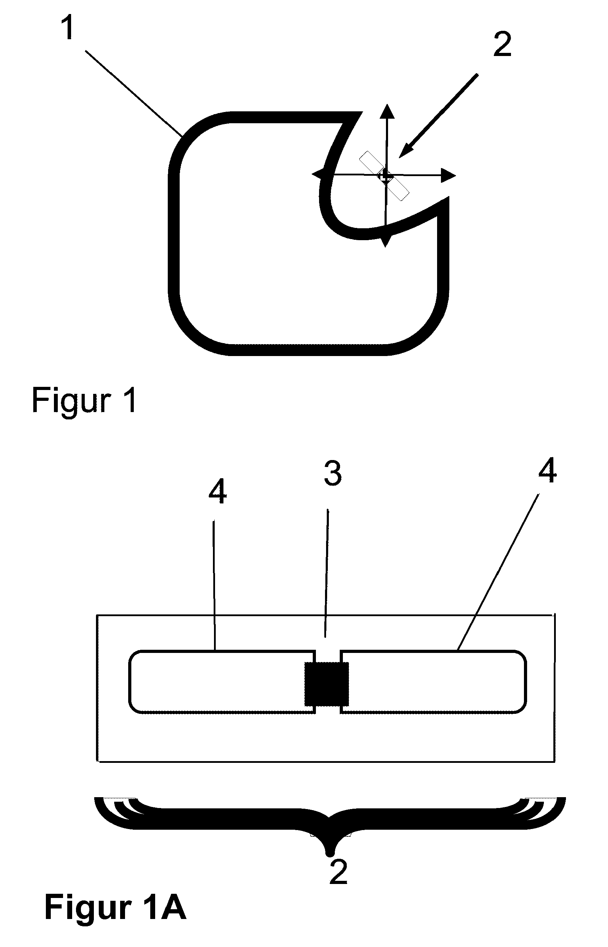

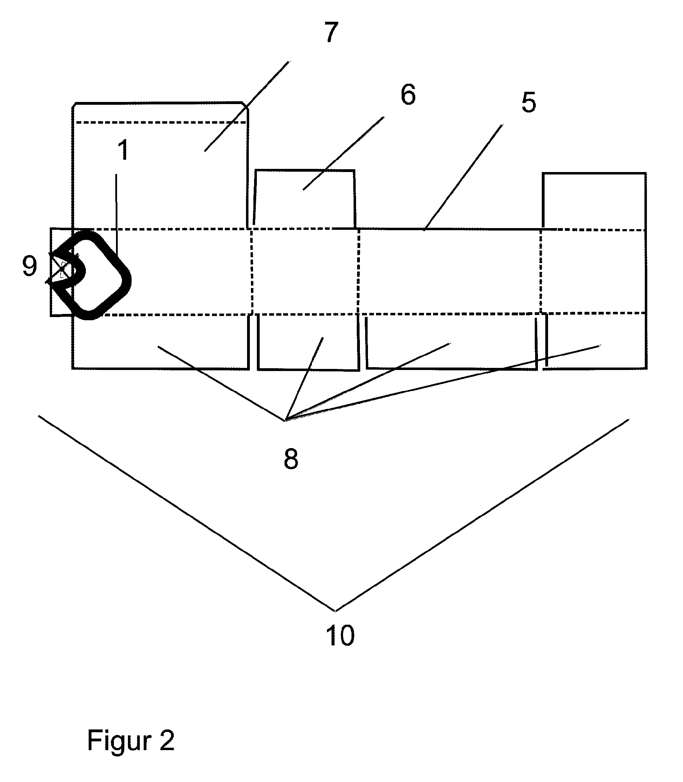

Die US 2005/0128525 A1 zeigt eine Kombination eines Flexodrucks und eines Tiefdrucks in einem Verfahren bzw. einer Vorrichtung. Es wird ein RFID-Applikator erwähnt.
Die Aufgabe wird gelöst durch die Merkmale des Anspruchs 1. Sinnvolle Weiterentwicklungen ergeben sich aus den jeweiligen Unteransprüchen.
Die Erfindung wird anhand von Figuren 1 (Boosterantenne), 1A (Minilabel) und 2 (Anordnung der Antennenanordnung auf einer Verpackung) näher erläutert.
Ein UHF-Transponder kann sowohl im Nahbereich eingesetzt werden, wobei die Einkoppelung über elektrische und/oder magnetische und/oder elektromagnetisehe Felder zum Einsatz kommen, als auch im Fernbereich, wobei die Einkoppelung über elektromagnetische Wellen erfolgt.
Die grundlegende Idee der Erfindung ist ein kleines Minilabel 2 auf Papier- oder Polymerträgerbasis, bestehend aus einer Minidipolantenne 4 und einem auf den Antennenkontakten montierten Chip 3 einzusetzen. Das Minilabel 2 wird dabei über elektromagnetische Felder in eine größere Boosterantenne 1 eingekoppelt, die zur Verstärkung der Sende- und Leseleitung des RFID-Transponders sorgt. Minilabel 2 und Boosterantenne 1 stehen dabei nicht in Kontakt über einen elektrischen Leiter (siehe Fig. 1 ), sondern werden ausschließlich über elektrische, magnetische oder elektromagnetische Felder miteinander gekoppelt.
Der Vorteil der erfindungsgemäßen Lösung besteht darin, dass die Boosterantenne 1 gleichzeitig mit den sonstigen Druckinhalten, wie Text oder Bilder, auf ein Druckprodukt 5 (Fig. 2) aufgedruckt werden kann. Das Minilabel 2 kann dann in der Druckmaschine oder in einem dem Druckprozess nach geordneten Arbeitsvorgang, zum Beispiel in einem Falzaggregat, oder einer Nachverarbeitungsmaschine, zum Beispiel in einer Stanz- oder Faltschachtelklebemaschine auf das Druckprodukt aufgeklebt oder in einer anderen geeigneten Art fixiert werden. Die gefundenen Lösungen ermöglicht dabei aus zweierlei Gründen deutlich höhere Applikationsleistungen als bei der Direktapplikation des Chips oder eines Straps auf die Antennenkontakte. Erstens sind die Anforderungen an die Positioniergenauigkeit deutlich geringer als bei der Direktkontaktierung und zweitens muss kein Ieitfähiger Kleber für die Fixierung des Minilabels 2 eingesetzt werden. Dies ermöglicht den Einsatz einer großen Bandbreite unterschiedlicher Klebstoffe mit unterschiedlichsten Einsatzprofilen. Als Alternative zu einem vorgedruckten Klebstoff kann auch Druckfarbe oder Lacke, die gleichzeitig dekorativen Zwecken dienen, zur Fixierung des Minilabels 2 eingesetzt werden. Als dritte Alternative ist das Minilabel 2 schon mit einem Klebstoff vor beschichtet und wird dadurch auf dem Drucksubstrat fixiert.

Das Minilabel 2 (Figur 1A) kann dabei Dimensionen von wenigen mm bis 40 mm in der Breite und 2 bis 30 mm in der Höhe haben und ist somit deutlich kleiner als die heute handelsüblichen "Smart Labels". Die Lesereichweite (Abstand Reader zu Minilabel 2) beträgt von direkter Kontaktierung bis zu einigen Zentimeter, liegt dabei aber bei deutlich geringeren Werten als bei den heute üblichen Lesereichweiten von UHF-Labeln, die typischerweise zwischen 80 cm und mehreren Metern betragen.

Beispiele für die Applikation der Boosterantenne auf das Substrat:
1. Die Boosterantenne 1 wird im Offsetdruck inline aufgedruckt, wobei der Druck der Ieitfähigen Struktur gleichzeitig mit dem Farbendruck erfolgt. Der Farbendruck kann dabei in einem beliebigen Druckverfahren erfolgen.
2. Die Boosterantenne 1 wird im Flexo- oder Hochdruck, z. B. in einem Lackwerk einer Bogenoffsetdruckmaschine, inline auf das Substrat aufgedruckt, wobei der
   Druck der leitfähigen Struktur gleichzeitig mit dem Farbendruck erfolgt. Der Farbendruck kann dabei in einem beliebigen Druckverfahren erfolgen.
3. Die Boosterantenne 1 wird im Tiefdruck inline aufgedruckt, wobei der Druck der leitfähigen Struktur gleichzeitig mit dem Farbendruck erfolgt. Der Farbendruck kann dabei in einem beliebigen Druckverfahren erfolgen.
4. Die Boosterantenne 1 wird im Tintenstrahldruck inline aufgedruckt, wobei der Druck der Ieitfähigen Struktur gleichzeitig mit dem Farbendruck erfolgt. Der Farbendruck kann dabei in einem beliebigen Druckverfahren erfolgen.
5. Die Boosterantenne 1 wird nachträglich in einem separaten Druckgang auf ein mit Bild- oder Textinformationen versehenes Druckprodukt in einem der Verfahren Offset-, Tief-, Flexo-, Hoch- oder Tintenstrahldruck aufgedruckt.
6. Die Boosterantenne 1 wird in einem der Druckverfahren Offset-, Tief-, Flexo-, Hoch- oder Tintenstrahldruck auf ein Drucksubstrat aufgedruckt, das nachträglich mindestens auf einer beliebigen Seite des Drucksubstrats mit einer Text und/oder Bildinformation in mindestens einem der Druckverfahren Offset-, Tief-, Flexo-, Hoch- oder Tintenstrahldruck bedruckt wird.

Das Minilabel 2, bestehend aus Miniantenne 4 und Chip 3 kann dann über einen Spender aufgebracht werden. Das Aufspenden auf das Substrat kann dabei von einer Rolle durch Austanzen oder Abschneiden des Labels mit einer Schneide bzw. Stanzvorrichtung erfolgen. Das Substrat kann aber auch vorab abschnittsweise in einer separaten oder der Spendevorrichtung vorgelagerten Schneide- oder Stanzvorrichtung in einzelne Abschnitte geteilt und in einem Zwischenlager, zum Beispiel einem Ministapel, abgelegt werden und von dort abschnittsweise von der Spendereinrichtung abgenommen werden. Das Anhaften des Minilabels 2 auf dem Substrat erfolgt dabei über einen nicht leitenden Klebstoff, der UV-härtend oder thermisch, oxidativ und/oder wegschlagend härtend ausgelegt sein kann. Der Klebstoff kann dabei vor dem Spendevorgang auf das Substrat auf das Minilabel aufgebracht oder an der Applikationsstelle des Minilabels zuvor auf den Substrat aufgebracht worden sein. Die Applikation des Klebstoffes kann dabei über eine Düse oder in einem der Druckverfahren Offsetdruck, Tiefdruck, Flexodruck, Hochdruck oder Tintenstrahldruck partiell auf den Bedruckstoff aufgebracht worden sein. Die Anhaftung des Minilabels kann aber auch über einen Dispersionskleber, einen Wiederanfeuchtkleber oder ein doppeltseitiges Klebeband erfolgen.

Die Applikation des Minilabels 2 kann dabei in der Druckmaschine durch eine geeignete Spendeeinrichtung erfolgen, wobei der Aufspendevorgang vor oder nach dem Druck von Farbe und Text erfolgen kann, wenn der Druck der Boosterantenne 1 auf derselben Substratseite, wie der Text- und Bilderdruck erfolgt.

Die Boosterantenne 1 kann sich auch auf der Seite des Substrates befinden, die im zum Beispiel im Falle einer Verpackung die Innenseite der Verpackung 5 bildet. Aus optischen und psychologischen Gesichtspunkten ist es oftmals gewünscht den RFID-Transponder für den Verbraucher unsichtbar anzubringen. In diesem Fall sind zwei Ausführungen der Minilabelapplikation denkbar, einmal, indem das Minilabel 2 auf dieselbe Seite des Verpackungsmaterials 5 angebracht wird, wie die Boosterantenne 1 , oder das Minilabel 2 auf die gegenüber liegende Seite des Verpackungsmaterials 5 angebracht wird und die elektromagnetische Koppelung durch das Drucksubstrat hindurch erfolgt. Für einen Druck der Boosterantenne 1 auf die Verpackungsinnenseite bedeutet dies zum Beispiel, dass das Minilabel auf die Verpackungsinnenseite appliziert wird. Da dieses Minilabel 2 sehr klein ist, stört es in der Regel nicht den optischen Eindruck der Verpackung oder des Druckproduktes. Diese Vorgehensweise ist zum Beispiel dann sinnvoll, wenn nur eine ausgewählte Anzahl von Produkten mit einem Minilabel ausgestattet werden sollen. Der Applikationsvorgang des Minilabels 2 kann dann während Iangsameren Verarbeitungsschritten erfolgen, zum Beispiel während des Abpack- oder Abfüllvorgangs.

Die Applikation des Minilabels 2 auf das Druckprodukt 5 kann aber auch in einem beliebigen, dem Druckvorgang nach geordneten Weiterverarbeitungsschritt des Druckproduktes erfolgen. Für die Integration der Applikationsvorrichtung zum Applizieren des Minilabels geeignete Weiterverarbeitungsvorrichtungen sind unter anderem Falzmaschinen, Klebemaschinen, Zusammentragmaschinen, Faltschachtelklebemaschinen, Druckinspektionsanlagen, Stanzmaschinen, Schneidemaschinen oder spezielle Vorrichtungen, die ausschließlich der Applikation des Minilabels dienen.

In einer speziellen Variante wird bei einem Druckprodukt, dass später zum einem fertigen Druckprodukt geklebt wird, die Boosterantenne 1 bis in einen Kleberand 9 oder den Klebefalz einer Faltschachtel 10 gedruckt. Das Minilabel 2 wird dann in einem Arbeitsschritt oder in zwei direkt aufeinander folgenden Arbeitschritten aufgebracht, wobei der Klebstoff einerseits zum Verbinden des Druckproduktes, aber auch zur Befestigung des Minilabels 2 dient. Diese Vorgehensweise hat zusätzlich den Vorteil, dass das Minilabel 2 durch die miteinander verbundenen Lagen des Druckproduktes geschützt ist.

Als Ausführungsbeispiel entsprechend Figur 2 hierfür dient eine Faltschachtel 10, die bedruckte Seitenwände 5, Bodenteile 8 und Deckelteile 6, 7 aufweist. Die Faltschachtel 10 ist hierbei so ausgebildet, dass die Boosterantenne 1 sich bis in eine Klebelasche 9 der Faltschachtel 10 erstreckt, die während des Klebevorgangs mit der gegenüberliegenden Seite der Faltschachtel 10 verbunden wird. Die Boosterantenne 1 kann gemeinsam mit den Druckinhalten der Seitenwände 5, also inline, gedruckt werden und weist eine Ausnehmung auf, die zur Applikation des Minilabels 2 verwendet werden soll. Das Druckverfahren ist wählbar wie an anderer Stelle ausführlich erläutert wird.
Das Minilabel 2 kann dann in der Klebemaschine für die Faltschachtel 10 mit dem Aufbringen des Klebstoffs oder in direktem Anschluss daran auf die Klebestelle aufgebracht werden. Nach dem Falten und Verbinden der Faltschachtelteile liegt das Minilabel 2 dann geschützt zwischen den beiden Substratlagen, die während des Klebevorgangs verbunden wurden.

Vor der Applikation des Minilabels 2 wird die Boosterantenne 1 in sinnvoller Weise einem Qualitätssicherungsschritt unterzogen. Dieser Qualitätssicherungsschritt kann einerseits durch eine Inspektion durch Bildverarbeitungsvorrichtung oder auch durch eine tastende Überprüfung der Leitfähigkeit oder davon abgeleitenden Größen erfolgen. Die Qualitätssicherung kann aber auch nach der Applikation des Minilabels 2 erfolgen. Möglich ist in diesem Zusammenhang, dass der Transponder, bestehend aus Boosterantenne 1 und Minilabel 2 mit einem Datensatz beschrieben und dieser Datensatz wieder ausgelesen wird. Nach Überprüfung des Zustandes des Datensatzes ist auch die Funktionsfähigkeit des Transponders sichergestellt.

Alle in dieser Beschreibung verwendeten Begriffe, die im Text im Singular benutzt worden sind, können auch ohne explizite Erwähnung im Plural verwendet werden. Ein Minilabel kann beispielsweise folglich auch eine Vielzahl von Minilabeln bedeuten, ein Offsetdruckwerk kann folglich auch als eine Vielzahl von Offsetdruckwerken gemeint sein.

Offsetdruck gehört zu den Flachdruckverfahren, bei dem die druckenden und die nicht druckenden Bestandteile auf der Druckform annähernd auf einer Ebene liegen. Das Druckbild wird dabei in den meisten Fällen von der Druckform über einen Zwischenträger, ein Gummituch, auf das Drucksubstrat übertragen. Im Sinne der Erfindung umfasst also der Begriff Offsetdruck das Nass- und das Trockenoffsetdruckverfahren.

Tiefdruck gehört zu den Druckverfahren, bei denen das Druckbild unterhalb der Oberfläche der Druckform durch Vertiefungen gebildet wird. Die Vertiefungen, auch Näpfchen genannt, werden mit Druckfarbe gefüllt und die überschüssige an der Oberfläche der Druckform befindliche Druckfarbe durch eine Vorrichtung, zum Beispiel ein Rakelmesser, entfernt.

Siebdruck gehört zu den Druckverfahren, bei denen die Druckfarbe durch Öffnungen der Druckform hindurchgedrückt wird. Das Sieb kann dabei durch textile oder polymere Gewebe oder metallische Schichten gebildet sein. Im Sinne der Erfindung umfasst der Begriff Siebdruck den rotativen und den Flachsiebdruck.

Der Flexodruck gehört zu den Hochdruckverfahren, bei denen ein erhabenes Relief, das das Druckbild darstellt, mit Druckfarbe eingefärbt wird. Im Sinne der Erfindung umfasst der Begriff Flexodruck alle Druckverfahren, bei denen ein Relief mit Druckfarbe eingefärbt wird. Die Flexodruckform kann dabei als Platte, als Sleeve (Hülse), als Walze oder als einzelnen Druckformen ausgestaltet sein, die auf ein Trägersubstrat montiert wurde.

Der Tintenstrahldruck ist dabei ein Druckverfahren, das ohne Druckform auskommt. Das Druckbild wird dabei auf das Drucksubstrat aufgesprüht. Im Sinne der Erfindung umfasst der Begriff Tintenstrahldruck alle Formen von Drop-on-Demand oder Continuous-Tintenstrahldrucksystemen.

Bogendruckmaschinen sind Druckmaschinen, die Papier, Karton oder anderes Material in Form von einzelnen Bögen bedrucken. Rollendruckmaschinen sind Druckmaschinen, die eine von einer Rolle abwickelnde Bahn, zum Beispiel eine Papierbahn, bedrucken.

Der Begriff leitfähig bzw. leitend wird im Sinne der Erfindung als Synonym für elektrische Leitfähigkeit verwandt.

Eine Coil-on-Chip Lösung bedeutet im Sinne der Erfindung, dass Chip und Antenne aus demselben Material bei der Herstellung des Chips oder in einem direkt nach geordnetem Arbeitsgang gebildet werden.

Minilabel bedeutet im Sinne der Erfindung, dass ein Chip auf einer Antenne, die zuvor in einem beliebigen Verfahren auf dem Minilabel erzeugt wurde, kontaktend befestigt wird. Chip und Antennenträger bestehen hierbei aus zwei unterschiedlichen Substraten.

## Patentansprüche

1. Verfahren zur Herstellung eines Druckproduktes bestehend aus einer oder mehreren Lagen eines Drucksubstrates (10), wobei mindestens eine Lage mit Text- und/oder Bildinformation bedruckt ist, und mindestens einen RFID, radio-frequencyidentification, Transponder beinhaltet, wobei
der RFID-Transponder aus einer Boosterantenne (1), die in einem der Massendruckverfahren Offset-, Tief-, Flexo-, Sieb- oder Tintenstrahldruck direkt auf das Drucksubstrat (10) aufgedruckt wurde und einem Minilabel (2), bestehend aus RFID-Chip (3) und einer Miniantenne (4) für die Nahfeldkopplung, gebildet wird, wobei das Minilabel (2) aus einer oder mehreren Minidipolantennen (4) besteht, auf deren Kontakten ein RFID-Chip (3) kontaktend zum Beispiel mit einem Leitkleber befestigt ist, wobei die Boosterantenne (1) und das Minilabel (2) nicht kontaktend miteinander verbunden sind, sondern die Einkoppelung der Signale von Boosterantenne (1) zu Minilabel (2) und zurück über magnetische und/oder elektromagnetische Felder erfolgt, und sich zwischen Minilabel (2) und Boosterantenne (1) mindestens eine Zwischenlage befindet,
**gekennzeichnet dadurch, dass**
die Boosterantenne (1) in einem oder mehreren Druckwerken nach dem Verfahren des Offsetdrucks oder des Flexodrucks oder Tiefdrucks oder des Siebdrucks in einer Bogen- oder Rollenrotationsdruckmaschine mit einer entsprechend leitfähigen Druckfarbe oder einer entsprechenden Druckfarbe, die nachträglich leitfähig, zum Beispiel durch Bestäuben mit einem metallischen Pulver, funktionalisiert wird, auf das Drucksubstrat (10) gedruckt wird,
wobei eine Druckmaschine mit einem oder mehreren Druckwerken verwendet wird, die Bestandteil einer Bogen- oder einer Rollendruckmaschine ist, und die wahlweise neben dem gewählten Hauptdruckverfahren noch andere Druckverfahren umfasst
oder wobei das jeweilige Hauptdruckverfahren für die Erzeugung der Boosterantenne (1) in eine Weiterverarbeitungsvorrichtung integriert ist, die dem Druckvorgang in der Druckmaschine in der Fertigungsabfolge nachgeordnet ist
oder dass die Boosterantenne in einem oder mehreren Tintenstrahldruckwerken einer Bogen- oder Rollenrotationsdruckmaschine mit einer leitfähigen Tinte oder einer Tinte, die nachträglich leitfähig, zum Beispiel durch Bestäuben mit einem metallischen Pulver, funktionalisiert wird, auf das Drucksubstrat gedruckt wird,
wobei eine Druckmaschine mit einem oder mehreren Tintenstrahldruckwerken verwendet wird, die Bestandteil einer Bogen- oder einer Rollendruckmaschine sind, die neben Tintenstrahldruck noch weitere Druckverfahren umfasst oder das Tintenstrahldruckwerk in eine Weiterverarbeitungsvorrichtung integriert ist, die dem Druckvorgang in der Druckmaschine in der Fertigungsabfolge nachgeordnet ist.

2. Verfahren zur Herstellung eines Druckproduktes nach Anspruch 1,
**gekennzeichnet dadurch, dass**
das Minilabel (2) mit einer Applikationsvorrichtung auf das Drucksubstrat (10) gespendet wird, wobei das Drucksubstrat (10) an der betreffenden Stelle zuvor mit einem Klebstoffauftrag zur Fixierung des Minilabels (2) versehen wurde und dass der Klebstoff auf das Drucksubstrat (10) mittels eines Druckwerks oder einer Düse aufgetragen wurde.

3. Verfahren zur Herstellung eines Druckproduktes nach Anspruch 1,
**gekennzeichnet dadurch, dass**
das Minilabel (2) vor der Applikation auf das Drucksubstrat (10) mit einer Klebstoffschicht versehen wird.

4. Verfahren zur Herstellung eines Druckproduktes nach Anspruch 1,
**gekennzeichnet dadurch, dass**
eine Anhaftung des Minilabels (2) auf dem Drucksubstrat (10) über einen Dispersionskleber, einen Wiederanfeuchtkleber oder ein doppelseitiges Klebeband erfolgt.

5. Verfahren zur Herstellung eines Druckproduktes nach einem der Ansprüche 2 bis 3
**gekennzeichnet dadurch, dass**
es sich bei dem Klebstoff um einen nichtleitenden Klebstoff handelt, der thermisch, oxidativ und/oder wegschlagend trocknend ausgelegt ist, ein Hotmelt-Klebstoff ist oder ein Klebstoff ist, der durch Polymerisation härtet.

6. Verfahren zur Herstellung eines Druckproduktes nach Anspruch 1,
**gekennzeichnet dadurch, dass**
das Minilabel (2) oder das Drucksubstrat (10) nach dem Lackauftrag in der Druckmaschine auf den nicht vollständig getrockneten Lackfilm aufgespendet wird und die Anhaftung des Minilabels (2) auf dem Druckprodukt durch den Lackfilm erfolgt.

7. Verfahren zur Herstellung eines Druckproduktes nach einem der Ansprüche 1 bis 6,
**gekennzeichnet dadurch, dass**
das Minilabel (2) durch eine Schneid- oder Stanzvorrichtung aus einer Rollenbahn ausgeschnitten oder ausgestanzt wird, und anschließend auf das Drucksubstrat appliziert wird oder dass das Minilabel (2) abschnittsweise als einzelne Label vorliegt und aus einem Vorrat, wie einem Ministapel, auf das Drucksubstrat appliziert wird.

8. Verfahren zur Herstellung eines Druckproduktes nach einem der Ansprüche 1 bis 7,
**gekennzeichnet dadurch, dass**
die Applikation des Minilabels (2) während des Druckvorgangs durch die Druckmaschine erfolgt, oder dass die Applikation des Minilabels (2) während des Klebevorgangs in einer Faltschachtelklebemaschine erfolgt oder dass die Applikation des Minilabels (2) während des Durchlaufs durch eine Zusammentragmaschine oder eines Klebebinders erfolgt oder dass die Applikation des Minilabels (2) während des Abfüllvorgangs in einer Abfüllanlage erfolgt.

9. Verfahren zur Herstellung eines Druckproduktes nach Anspruch 1,
**gekennzeichnet dadurch, dass**
ein Klebstoff zum Zusammenfügen eines Druckproduktes, wie die Klebebindung eines Buches oder der Klebstoffauftrag auf eine Klebelasche (9) einer Faltschachtel (10) gleichzeitig zur Befestigung des Minilabels (2) genutzt wird.

10. Verfahren zur Herstellung eines Druckproduktes nach einem der Ansprüche 1 bis 9,
**gekennzeichnet dadurch, dass**
es sich bei dem Druckprodukt um eine Verpackung handelt, die mit Gütern befüllt wird, wobei das Drucksubstrat, aus der die Verpackung gebildet wird, ein Papier-, ein Karton-, ein Wellpappe oder ein Kunststoffdrucksubstrat oder ein Laminat aus verschiedenen Substraten sein kann oder dass es sich bei dem Druckprodukt um ein Buch, eine Zeitung, eine Zeitschrift oder eine Broschüre handelt.

11. Verfahren zur Herstellung eines Druckproduktes nach einem der Ansprüche 1 bis 10,
**gekennzeichnet dadurch, dass**
das Trägersubstrat des Minilabels (2), das die Miniantenne (4) und den Chip (3) trägt, eine Polymerfolie, ein Papier oder Karton ist.

12. Verfahren zur Herstellung eines Druckproduktes nach einem der Ansprüche 1 bis 11,
**gekennzeichnet dadurch, dass**
der Druck der Boosterantenne (1) auf derselben Seite des Drucksubstrats (10) wie der Text- und/oder der Farbendruck in einem oder in aufeinander folgenden Druckgängen erfolgt, das Druckprodukt anschließend lackiert wird, so dass die Boosterantenne (1) vollständig durch die Lackschicht vor Abnutzung und/oder Oxidation geschützt ist und das Minilabel (2) auf der Lackschicht appliziert wird.

13. Verfahren zur Herstellung eines Druckproduktes nach einem der Ansprüche 1 bis 11,
**gekennzeichnet dadurch, dass**
der Druck der Boosterantenne (1) auf gegenüberliegenden Seite des Drucksubstrats (10) wie der Text- und/oder der Farbendruck in einem oder in aufeinanderfolgenden Druckgängen erfolgt, wobei das Minilabel (2) auf die Außenseite der Verpackung appliziert wird und sich die Boosterantenne (1) auf der Innenseite der Verpackung befindet.

14. Verfahren zur Herstellung eines Druckproduktes nach einem der Ansprüche 1 bis 13,
**gekennzeichnet dadurch, dass**
die Dimension des Minilabels (2) in der Dimensionsrichtung quer und längs zur Ausrichtung der Antenne (4) auf dem Minilabel (2) kleiner 10 mm beträgt oder die Dimension des Minilabels in der Dimensionsrichtung quer und längs zur Antennenrichtung der Antenne auf dem Minilabel kleiner 20 mm beträgt oder dass die Dimension des Minilabels in der Dimensionsrichtung quer und längs zur Antennenrichtung der Antenne auf dem Minilabel kleiner 50 mm beträgt.

## Claims

1. Process for producing a printed product consisting of one or more layers of a printing substrate (10), whereby at least one layer is printed with text and/or image information, containing at least one RFID, radio frequency identification, transponder, whereby the RFID transponder is made up of a booster antenna (1) which was printed directly onto the printing substrate (10) using a mass printing process such as offset, gravure, flexo, screen or ink-jet printing, and a mini-label (2), consisting of an RFID chip (3) and a mini-antenna (4) for near field coupling, whereby the mini-label (2) consists of one or more mini-dipole antennae (4) on whose contacts an RFID chip (3) is fixed, for example with conductive adhesive for establishing contact, whereby the booster antenna (1) and the mini-label (2) have no contacting connection with each other, but the coupling of the signals from the booster antenna (1) to the mini-label (2) and back is effected by magnetic and/or electro-magnetic fields, there being at least one intermediate layer between the mini-label (2) and the booster antenna (1), **characterized in that**
the booster antenna (1) is printed onto the printing substrate (10) in one or more printing units according to the offset printing process or the flexo printing process or the gravure printing process or the screen printing process in a sheet-fed or web-fed rotary press with a suitably conductive printing ink or a suitable printing ink which is subsequently made conductive, for example by dusting with a metallic powder, whereby a printing press is used which has one or more printing units and which is part of a sheet-fed or web-fed rotary press, and which beside the selected main printing process optionally also comprises other printing processes, or whereby the main printing process for the production of the booster antenna (1) is integrated in a further processing device which is downstream of the printing process in the printing press in the production sequence,
or that the booster antenna is printed onto the printing substrate in one or more ink-jet printing units in a sheet-fed or web-fed rotary printing press with conductive ink or with ink which is subsequently made conductive, for example by dusting with a metallic powder,
whereby a printing press is used which has one or more ink-jet printing units which are part of a sheet-fed or web-fed rotary press, which beside the ink-jet printing process optionally also comprises other printing processes, or whereby the ink-jet printing unit is integrated in a further processing device which is downstream of the printing process in the printing press in the production sequence.

2. Process for producing a printed product in accordance with Claim 1,
**characterized in that**
the mini-label (2) is applied onto the printing substrate (10) with an application device, whereby an adhesive to fix the mini-label (2) was previously applied to the relevant position on the printing substrate (10) and the adhesive was applied to the printing substrate (10) by means of a printing unit or a nozzle.

3. Process for producing a printed product in accordance with Claim 1,
**characterized in that**
a layer of adhesive is applied to the mini-label (2) before application to the printing substrate (10).

4. Process for producing a printed product in accordance with Claim 1,
**characterized in that**
the adhesion of the mini-label (2) to the printing substrate (10) is effected by means of a water-based dispersion adhesive, a remoistening adhesive or a double-sided adhesive tape.

5. Process for producing a printed product in accordance with one of Claims 2 to 3,
**characterized in that**
the adhesive is a non-conductive adhesive which is designed to dry thermally, by oxidation and/or by absorption, a hot-melt adhesive or an adhesive which hardens by polymerization.

6. Process for producing a printed product in accordance with Claim 1,
**characterized in that**
the mini-label (2) or the printing substrate (10) is applied to the not yet fully dried lacquer film after the lacquer has been applied in the printing press, and the adhesion of the mini-label (2) to the printed product is effected by the lacquer film.

7. Process for producing a printed product in accordance with one of Claims 1 to 6,
**characterized in that**
the mini-label (2) Is cut out or punched out of a roller web by a cutting or punching device, and is then applied to the printing substrate, or that the mini label (2) is present section by section as a single label and is applied to the printing substrate from a stock, such as a mini-stack.

8. Process for producing a printed product in accordance with one of Claims 1 to 7,
**characterized in that**
the application of the mini-label (2) takes place during the printing process by the printing press, or that the application of the mini-label (2) is effected during the bonding process in a folder gluer, or that the application of the mini-label (2) is effected during the passage through a gathering machine or binder, or that the application of the mini-label (2) is effected during the filling operation in a filling system.

9. Process for producing a printed product in accordance with Claim 1,
**characterized in that**
an adhesive for the assembly of a printed product, such as the binding of a book or the application of adhesive to the adhesive flap (9) of a folding box (10) is simultaneously used to attach the mini-label (2).

10. Process for producing a printed product in accordance with one of Claims 1 to 9,
**characterized in that**
the printed product is packaging that is filled with goods, whereby the printing substrate from which the packaging is formed may be a paper, a cardboard, a corrugated cardboard or a plastic printing substrate, or a laminate of different substrates, or that the printed product is a book, a newspaper, a magazine or a brochure.

11. Process for producing a printed product in accordance with one of Claims 1 to 10,
**characterized in that**
the carrier substrate of the mini-label (2) carrying the mini-antenna (4) and the chip (3) is a polymer film, paper or cardboard.

12. Process for producing a printed product in accordance with one of Claims 1 to 11,
**characterized in that**
the printing of the booster antenna (1) is effected on the same side of the printing substrate (10) as the text and/or color printing in one or in successive printing cycles, the printed product is then lacquered so that the booster antenna (1) Is completely protected by the lacquer layer from wear and/or oxidation, and the mini-label (2) is applied to the lacquer layer.

13. Process for producing a printed product in accordance with one of Claims 1 to 11,
**characterized in that**
the printing of the booster antenna (1) is effected on the opposite side of the print substrate (10) from the text and/or the color printing in one or in successive printing cycles, whereby the mini-label (2) is applied to the outside of the packaging and the booster antenna (1) is located on the inside of the packaging.

14. Process for producing a printed product in accordance with one of Claims 1 to 13,
**characterized in that**
the dimension of the mini-label (2) in the dimensional direction across and along the alignment of the antenna (4) to the mini-label (2) is less than 10 mm, or the dimension of the mini-label in the dimensional direction across and along the antenna direction of the antenna to the mini-label is less than 20 mm, or that the dimension of the mini-label in the dimensional direction across and along the antenna direction of the antenna to the mini-label is less than 50 mm.

## Revendications

1. Procédé de fabrication d'un produit d'impression composé d'une ou de plusieurs couches d'un substrat d'impression (10), au moins une couche étant imprimée avec des informations sous forme de texte et/ou d'image, et comprenant au moins un transpondeur à identification par radiofréquence (RFID), le transpondeur RFID étant composé d'une antenne amplificatrice (1), qui a été imprimée directement sur le substrat d'impression (10) au cours d'un des procédés d'impression de masse à savoir l'impression offset, en relief, la flexographie, la sérigraphie ou l'impression par jet d'encre, et d'une mini-étiquette (2), composée d'une puce RFID (3) et d'une mini-antenne (4) pour le couplage en champ proche, la mini-étiquette (2) étant composée d'une ou de plusieurs mini-antennes dipôles (4), sur les contacts desquelles une puce RFID (3) est fixée en contact par exemple avec un adhésif conducteur, l'antenne amplificatrice (1) et la mini-étiquette (2) n'étant pas raccordées l'une à l'autre en contact, mais l'injection des signaux de l'antenne amplificatrice (1) vers la mini-étiquette (2) et en retour ayant lieu via les champs magnétiques et/ou électromagnétiques, et au moins une couche intermédiaire se trouvant entre la mini-étiquette (2) et l'antenne amplificatrice (1), **caractérisé en ce que** l'antenne amplificatrice (1) est imprimée sur le substrat d'impression (10), dans une ou plusieurs imprimantes après le procédé d'impression offset ou de flexographie ou d'impression en relief ou de sérigraphie dans une rotative à feuilles ou à rouleaux avec une couleur d'impression conductrice en conséquence ou une couleur d'impression correspondante, qui est rendue conductrice ultérieurement, par exemple par poudrage avec une poudre métallique,
une machine à imprimer étant utilisée avec une ou plusieurs imprimantes, laquelle fait partie d'une rotative à feuilles ou à rouleaux, et qui au choix outre le procédé d'impression principal sélectionné comprend d'autres procédés d'impression ou le procédé d'impression principal pour la production de l'antenne amplificatrice (1) étant intégré dans un dispositif de transformation, qui est situé après la procédure d'impression dans la machine à imprimer dans la séquence de fabrication ou **en ce que** l'antenne amplificatrice est imprimée sur le substrat d'impression, dans une ou plusieurs imprimantes à jet d'encre d'une rotative à feuilles ou à rouleaux avec une encre conductrice ou une encre rendue conductrice ultérieurement, par exemple par poudrage avec une poudre métallique,
une machine à imprimer étant utilisée avec une ou plusieurs imprimantes à jet d'encre, laquelle fait partie d'une rotative à feuilles ou à rouleaux, et qui outre le procédé d'impression à jet d'encre comprend d'autres procédés d'impression ou le procédé d'impression à jet d'encre étant intégré dans un dispositif de transformation, qui est situé après la procédure d'impression dans la machine à imprimer dans la séquence de fabrication.

2. Procédé de fabrication d'un produit d'impression selon la revendication 1,
**caractérisé en ce que**
la mini-étiquette (2) est fournie au substrat d'impression (10) à l'aide d'un dispositif d'application, le substrat d'impression (10) étant pourvu au préalable, à l'emplacement correspondant, d'une application de colle pour la fixation de la mini-étiquette (2) et **en ce que** la colle a été appliquée sur le substrat d'impression (10) à l'aide d'une imprimante ou d'une buse.

3. Procédé de fabrication d'un produit d'impression selon la revendication 1,
**caractérisé en ce que**
la mini-étiquette (2) est pourvue d'une couche de colle avant l'application sur le substrat d'impression (10).

4. Procédé de fabrication d'un produit d'impression selon la revendication 1,
**caractérisé en ce que**
une adhérence de la mini-étiquette (2) sur le substrat d'impression (10) intervient via une colle à dispersion, une colle à réhumidification ou un ruban adhésif double face.

5. Procédé de fabrication d'un produit d'impression selon l'une des revendications 2 à 3,
**caractérisé en ce que**
la colle est une colle non conductrice, qui est conçue à séchage thermique, par oxydation et/ou par absorption, une colle thermofusible ou une colle qui durcit par polymérisation.

6. Procédé de fabrication d'un produit d'impression selon la revendication 1,
**caractérisé en ce que**
la mini-étiquette (2) ou le substrat d'impression (10) est appliqué après l'application de vernis dans la machine à imprimer sur le film de vernis pas totalement sec et l'adhérence de la mini-étiquette (2) sur le produit d'impression intervient par l'intermédiaire du film de vernis.

7. Procédé de fabrication d'un produit d'impression selon l'une des revendications 1 à 6,
**caractérisé en ce que**
la mini-étiquette (2) est découpée ou poinçonnée par un dispositif de découpage ou de poinçonnage sur un transporteur à rouleaux, et est ensuite appliquée sur le substrat d'impression ou **en ce que** la mini-étiquette (2) existe, par sections, en tant qu'étiquette unique et est appliquée sur le substrat d'impression à partir d'un stock, comme une mini-pile.

8. Procédé de fabrication d'un produit d'impression selon l'une des revendications 1 à 7,
**caractérisé en ce que**
l'application de la mini-étiquette (2) a lieu pendant la procédure d'impression par la machine à imprimer, ou **en ce que** l'application de la mini-étiquette (2) a lieu pendant la procédure de collage dans une plieuse-colleuse ou **en ce que** l'application de la mini-étiquette (2) a lieu pendant le passage à travers une assembleuse ou une relieuse sans couture ou **en ce que** la mini-étiquette (2) a lieu pendant la mise en bouteille dans une chaîne d'embouteillage.

9. Procédé de fabrication d'un produit d'impression selon la revendication 1,
**caractérisé en ce que**
une colle pour l'assemblage d'un produit d'impression, comme la reliure sans couture d'un livre ou l'application de colle sur une patte à coller (9) d'une boîte pliante (10) est utilisée en même temps pour la fixation de la mini-étiquette (2).

10. Procédé de fabrication d'un produit d'impression selon l'une des revendications 1 à 9,
**caractérisé en ce que**
le produit d'impression est un emballage, qui est rempli de produits, le substrat d'impression, dans lequel est fabriqué l'emballage, pouvant être un papier, un carton, un carton ondulé ou un substrat d'impression en plastique ou un stratifié composé de différents substrats ou **en ce que** le produit d'impression est un livre, un journal, un magazine ou une brochure.

11. Procédé de fabrication d'un produit d'impression selon l'une des revendications 1 à 10, **caractérisé en ce que**
le substrat de support de la mini-étiquette (2), qui supporte la mini-antenne (4) et la puce (3), est une feuille polymère, un papier ou un carton.

12. Procédé de fabrication d'un produit d'impression selon l'une des revendications 1 à 11, **caractérisé en ce que**
l'impression de l'antenne amplificatrice (1) a lieu sur le même côté du substrat d'impression (10) que l'impression du texte et/ou des couleurs au cours d'un seul passage ou de passages les uns à la suite des autres, le produit d'impression est ensuite verni, de sorte que l'antenne amplificatrice (1) est totalement protégée par la couche de vernis contre l'usure et/ou l'oxydation et la mini-étiquette (2) est appliquée sur la couche de vernis.

13. Procédé de fabrication d'un produit d'impression selon l'une des revendications 1 à 11, **caractérisé en ce que**
l'impression de l'antenne amplificatrice (1) a lieu sur le côté opposé du substrat d'impression (10) comme l'impression du texte et/ou des couleurs au cours d'un seul passage ou de passages les uns à la suite des autres, la mini-étiquette (2) étant appliquée sur la face extérieure de l'emballage et l'antenne amplificatrice (1) se trouvant sur la face intérieure de l'emballage.

14. Procédé de fabrication d'un produit d'impression selon l'une des revendications 1 à 13, **caractérisé en ce que**
la dimension de la mini-étiquette (2) est inférieure à 10 mm dans le sens transversal et longitudinal par rapport à l'orientation de l'antenne (4) sur la mini-étiquette (2) ou la dimension de la mini-étiquette est inférieure à 20 mm dans le sens transversal et longitudinal par rapport à l'orientation de l'antenne sur la mini-étiquette ou **en ce que** la dimension de la mini-étiquette est inférieure à 50 mm dans le sens transversal et longitudinal par rapport à l'orientation de l'antenne sur la mini-étiquette.
